# EUROPÄISCHE PATENTSCHRIFT

(11) **EP 1 813 823 B1**
(45) Veröffentlichungstag und Bekanntmachung des Hinweises auf die Patenterteilung: **03.11.2010**
(21) Anmeldenummer: 07001237.2
(22) Anmeldetag: 20.01.2007
(51) Int. Cl.: F15B 15/26, F16B 7/14

(54) **Klemmvorrichtung**
Clamping device
Dispositif de serrage

(30) Priorität: 31.01.2006 DE 102006004659
(43) Veröffentlichungstag der Anmeldung: 01.08.2007
(73) Patentinhaber: SITEMA GmbH & Co. KG, 76135 Karlsruhe (DE)
(72) Erfinder: Back, Gunnar, 77815 Bühl (DE)
(74) Vertreter: Lemcke, Brommer & Partner

(56) Entgegenhaltungen:
- EP-A- 0 589 863
- CH-A- 413 532
- DE-A1- 1 804 857
- DE-A1- 3 831 459
- US-A- 2 632 425
- US-A- 3 353 455
- US-A- 3 815 470
- JAMALY F: "SICHERHEITSKONZEPTE FUER OELHYDRAULISCHE HUBWERKE. ÖTEIL I: KONVENTIONELLE SICHERUNGSMECHANISMEN GEGEN UNBEABSICHTIGTES ABSINKEN UND IHRE THEORETISCHE BEWERTUNG" O + P OLHYDRAULIK UND PNEUMATIK, VEREINIGTE FACHVERLAGE, MAINZ, DE, Bd. 40, Nr. 1, 1. Januar 1996 (1996-01-01), Seiten 57-62, XP000195395 ISSN: 0341-2660

## Beschreibung

Die Erfindung betrifft eine Vorrichtung zum Verklemmen einer unter Last stehenden Stange mittels zumindest eines am Stangenumfang angreifenden, radial elastischen Klemmelementes, das an seinem äußeren Umfang konisch geformt und in zumindest einem entsprechenden konisch geformten Außenteil angeordnet ist, derart, dass eine Relativbewegung zwischen Klemmelement und Außenteil zur Verklemmung der Stange, eine Gegenbewegung zur Freigabe der Stange führt, wobei die Gegenbewegung durch einen Lösekolben erzeugt wird, der durch ein Druckmedium, insbesondere Hydrauliköl beaufschlagbar ist, das von einer Pumpe geliefert wird.

Dabei kann das Klemmelement einteilig in Form einer Buchse ausgebildet sein oder aus mehreren einzelnen, über den Umfang erteilten Teilen bestehen. Ebenso kann das Außenteil als umlaufender Ring ausgebildet sein oder aus einzelnen in Umfangsrichtung benachbarten Keilen bestehen. Auch spielt es für die Anwendung der Erfindung keine Rolle, durch welches Teil die Relativbewegung zwischen Klemmelement und Außenteil erzeugt wird.

Beispiele für derartige Klemmvorrichtungen sind in der DE 3 811 225, DE 103 50 225, DE 69215328, DE 4126897, DE 3 907 780 und EP 103 555 und EP 731 284 beschrieben.

Eine Vorrichtung zum Verklemmen gemäß dem Oberbegriff von Anspruch 1 ist auch aus US-A-3 815 470 bekannt.

Üblicherweise wird das Klemmelement durch Federn im Klemmsinn belastet und hydraulisch in der Freigabestellung gehalten, so dass die Klemmvorrichtung bei Druckabfall wirksam wird.

Vorzugsweise wird die Energie der absinkenden Last zum Erzeugen der Klemmkraft mit herangezogen, indem das Klemmelement bei Mitnahme durch die Stange in Lastrichtung selbstverstärkend gegen die Stange gepresst wird.

Die Anmelderin hat nun erkannt, dass der die Klemmvorrichtung durchlaufende Druckmediumkreislauf, der zur Betätigung des Lösekolbens notwendig ist, mitunter zu schlecht reproduzierbaren Reibverhältnissen zwischen Stange und Klemmelement führt, weil an den relativ zueinander beweglichen Teilen keine hermetische Abdichtung des Druckmediumkreislaufes gegenüber der Umgebung möglich ist. Vielmehr muss, insbesondere nach längerer Betriebszeit, damit gerechnet werden, dass gewisse Leckagemengen aus dem Druckmediumkreislauf ausströmen und in diejenigen Teile der Klemmvorrichtung gelangen, die für die Höhe der maximal erzielbaren Klemmkraft verantwortlich sind.

Von diesen Erkenntnissen ausgehend liegt die Aufgabe der vorliegenden Erfindung darin, die bekannten Klemmvorrichtungen dahingehend zu verbessern, dass der Zutritt von Druckmedium zu dem für die Klemmkraft maßgeblichen Teilen der Klemmvorrichtung verhindert wird. Des Weiteren soll die Erfindung gestatten, die erfindungsgemäße Klemmvorrichtung als autarkes System unabhängig von einer äußeren Druckmediumquelle einzusetzen. Nicht zuletzt soll sich die Klemmvorrichtung durch kostengünstigen, kompakten Aufbau und hohe Wartungsfreiheit auszeichnen.

Diese Aufgabe wird erfindungsgemäß dadurch gelöst, dass die von dem Druckmedium beaufschlagten Bereiche des Lösekolbens und der ihn umgebenden Teile durch dichte, die Relativbewegung des Lösekolbens elastisch aufnehmende Membranen gegenüber der Umgebung abgedichtet sind.

Hierdurch ergibt sich der Vorteil eines absolut leckagefreien DruckmediumKreislaufes. Es sind weder Verunreinigungen der angrenzenden Bereiche der Klemmvorrichtung, insbesondere der für die Klemmkraft maßgeblichen Flächen zu befürchten, noch bedarf es einer regelmäßigen Nachfüllung von Druckmedium zum Leckage-Ausgleich.

Bei den genannten Membranen kann es sich um bekannte Metall- oder Gummimembranen handeln, die durch ihre Eigenelastizität die Relativbewegungen der angrenzenden Teile aufnehmen. Mit dem Begriff "Membranen" sollen aber auch Bälge und ähnliche dichte Kompensationselemente abgedeckt werden.

Für die Positionierung der Membranen bieten sich dem Fachmann verschiedene Möglichkeiten. Sie können unmittelbar zwischen dem Lösekolben und dem ihn umgebenden Zylinder angeordnet sein. Meist ist es aber konstruktiv günstiger, wenn sie zwischen axialen Anschlussteilen des Lösekolbens und des Zylinders eingebaut werden, derart, dass axial benachbart zu Lösekolben und/oder Zylinder zumindest ein gegenüber der Umgebung abgedichteter Ringraum entsteht, der auch von Druckmedium beaufschlagt wird. Dadurch bietet sich die vorteilhafte Möglichkeit, innerhalb der Klemmvorrichtung ein Druckmedium-Reservoir zur Verfügung zu stellen, wobei dieses Reservoir aufgrund der elastischen Membran auch Volumenänderungen des Druckmediums aufzunehmen vermag.

Eine besonders zweckmäßige Weiterbildung der Erfindung besteht darin, beidseits axial benachbart zu Lösekolben und Zylinder Ringräume zu bilden, deren radiale Querschnittsflächen so bemessen sind, dass das Druckmediumvolumen der Klemmvorrichtung bei Relativbewegungen des Lösekolbens ganz oder zumindest annähernd konstant bleibt. Mit anderen Worten: Wenn der Lösekolben im Sinne einer Aufhebung der Klemmung betätigt wird, so entspricht das dort verbrauchte Druckmediumvolumen der aus der Verschiebung des Lösekolbens resultierenden Volumenverringerung in den Ringräumen. Das Druckmediumvolumen bleibt dadurch in allen Schaltzuständen der Klemmvorrichtung nahezu konstant und es kann auf einen separaten Tank und/oder Ausgleichsbehälter verzichtet werden.

Eine andere, besonders zweckmäßige Weiterbildung der Erfindung besteht darin, die Hydraulikpumpe mitsamt ihrem Antrieb und einem Druckmedium-Reservoir in die Klemmvorrichtung zu integrieren. Hierdurch ergeben sich große Vorteile für den Anwender, weil die Klemmvorrichtung dann kein stationäres Druckmedium-Netz mehr benötigt, sondern ein einfacher Elektroanschluss für den Antriebsmotor der Pumpe genügt. Die Verlegung von Druckluft- oder ÖI-Leitungen entfällt und die erfindungsgemäße Klemmvorrichtung kann auch bei solchen Betreibern eingesetzt werden, die über keine eigene Drucköl- oder Druckluftquelle verfügen.

Vorzugsweise wird eine Schwingankerpumpe verwendet, die sich durch kleine Abmessungen auch hinsichtlich ihres Antriebes auszeichnet.

Schließlich hat es sich noch als günstig erwiesen, die Klemmvorrichtung mit einem eigenen Drucksensor auszustatten. Dieser Drucksensor erfasst den auf den Lösekolben einwirkenden Druck des Druckmediums und schaltet den Antrieb der Pumpe bei Unterschreiten eines vorgegebenen Druckes ein bis der gewünschte Druck erreicht ist. Dadurch werden Antrieb und Pumpe erheblich geschont, weil nur noch dann gepumpt werden muss, wenn der Druck am Lösekolben unter einen bestimmten Wert fällt.

Weitere Merkmale und Vorteile der Erfindung ergeben sich aus der nachfolgenden Beschreibung eines Ausführungsbeispieles und aus der Zeichnung selbst; dabei zeigt
Figur 1 einen Axialschnitt durch die erfindungsgemäße Klemmvorrichtung bei aktivierter Klemmung und
Figur 2 den gleichen Schnitt wie Figur 1 bei aufgehobener Klemmung.

Wie man sieht, besteht die Klemmvorrichtung aus einem zylindrischen Gehäuse 1 mit drei axial benachbarten Gehäuseteilen 1a, 1b und 1c. In ihrem Zentrum wird die Klemmvorrichtung von einer Stange 2 durchquert, die das verschiebbare Maschinenelement darstellt, das von der Klemmvorrichtung festgehalten werden soll. Dazu ist die Stange 2 von einem Klemmelement in Form einer an ihrem äußeren Umfang konischen Buchse 3 umgeben. Diese konische Buchse hat in bekannter Weise Axialschlitze, so dass sie in radialer Richtung elastisch ist. Sie steckt im Innenkonus eines passenden Außenringes, der im Ausführungsbeispiel einstückig im Gehäuseteil 1a ausgebildet ist.

Die Klemmbuchse 3 ist axial verschiebbar gelagert und wird durch ein Federpaket 4 in Last- und Klemmrichtung belastet. An ihrem im Federpaket 4 abgewandten Ende stößt die Klemmbuchse 3 gegen einen Lösekolben 5. Dieser Lösekolben 5, genauer gesagt sein mit ihm fest verbundener Außenring 5a ist in einem Zylinder, der durch das mittlere Gehäuseteil 1 b gebildet wird, axial verschiebbar, wobei zwischen diesen Teilen ein ringförmiger Zylinderraum 6 ausgebildet ist, der sich bei Verschiebung des Lösekolbens verkleinert oder vergrößert.

Außerdem ist der Lösekolben 5 an zwei axial beabstandeten Bereichen beidseits des Zylinderraumes 6 über jeweils eine Ringmembran 7 bzw. 8 mit dem als Zylinder fungierenden Gehäuseteil 1 b verbunden, und zwar derart, dass innerhalb der Membranen 7 und 8 jeweils zwischen dem Lösekolben 5 bzw. seinem Außenring 5a einerseits und dem als Zylinder fungierenden Gehäuseteil 1 b andererseits geschlossene Ringräume 7a bzw. 8a entstehen. Diese Ringräume fungieren als Reservoir für das Druckmedium - vorzugsweise Hydrauliköl - und sind ebenso wie der Zylinderraum 6 über Leitungen 17 bzw. 18 bzw. 16 an einen Hydraulikkreislauf mit einer Pumpe 9 und elektrischem Antriebsmotor 10 angeschlossen und bilden einen geschlossenen Kreislauf. Die Pumpe 9 mit ihrem Antrieb 10 ist vorzugsweise eine Schwingankerpumpe. Sie kann über die Leitung 16 und eine Rückflusssperre Drucköl in den Zylinderraum 6 hineinpumpen und dadurch den Lösekolben 5 nach links verschieben, wodurch die Klemmbuchse 3 aus ihrer Klemmstellung herausbewegt wird. Lecköl, das zwischen Lösekolben und Zylinder entweicht, kann ausschließlich in die Ringräume 7a und 8a gelangen und wird von dort durch die Pumpe 9 zurückgesaugt. Die Membranen 7 und 8 bewirken somit eine hermetisch dichte, aber axial nachgiebige Abdichtung des Lösekolbens 15 gegenüber seinem zylindrischen Gehäuseteil 1b. Der Druckmedium-Kreislauf ist also an den beweglichen Teilen gegenüber der Umgebung abgedichtet.

Die Membranen 7 und 8 sind an ihrem äußeren Umfang zwischen den Gehäuseteilen 1a und 1 b bzw. den Gehäuseteilen 1 b und 1c eingespannt, während sie an ihrem inneren Umfang zwischen dem Außenring 5a und einem Stützring 11 bzw. zwischen dem Außenring 5a und einem radial vorspringenden Absatz des Lösekolbens 5 eingespannt sind. Alternativ können die Membranen an ihren Rändern auch angelötet werden. Der freie Bereich der Membranen 7 und 8 ist hinreichend flexibel, um die Axialverschiebung des Lösekolbens 5 elastisch aufzunehmen.

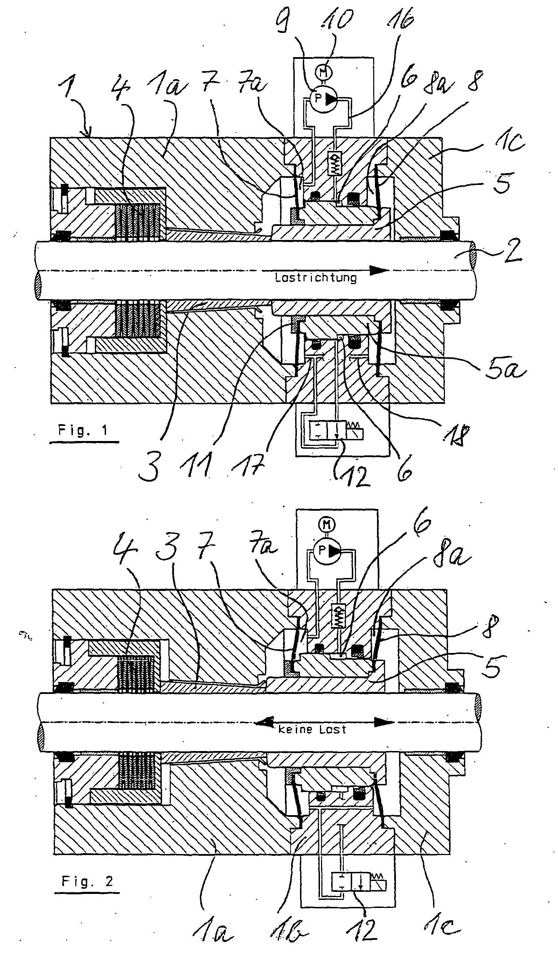

Figur 1 zeigt die Klemmvorrichtung in der Klemmposition, d. h., dass die Klemmbuchse 3 durch das Federpaket 4 gegen die Stange 2 gepresst wird und diese festhält. Die Druckleitung 16 ist dabei mehr oder weniger drucklos. Im Ringraum 6 kann sich kein Überdruck ausbilden, weil er über ein elektrisches Magnetventil 12 an die Leitung 17 und damit an die Saugseite der Pumpe 9 angeschlossen ist.

Meist wird die Klemmvorrichtung als Notbremse für unterschiedlichste Antriebe eingesetzt, sie soll also im Normalfall die Bewegung der Stange 2 zulassen. Dieser Zustand ist in Figur 2 gezeigt. Die Klemmvorrichtung ist hier bei aufgehobener Klemmung, also mit aktiviertem Lösekolben 5 dargestellt. Man sieht, dass die Pumpe 9 Öl in den Ringraum 6 gepumpt hat und das Ventil 12 den Abfluss aus dem Ringraum 6 blockiert. Dadurch ist der Lösekolben 5 nach links verschoben worden und hat die Klemmbuchse 3 aus der Klemmposition gelöst.

Gleichzeitig erkennt man, dass sich bei dieser Verschiebebewegung die Ölvolumina in den Ölräumen 7a und 8a verändert haben: während das Volumen des linken Ringraumes 7a größer geworden ist, hat das Volumen des rechten Ringraumes 8a abgenommen.

Durch entsprechende Bemessung des Zylinderraumes 6 und der Ringräume 7a und 8a ist sichergestellt, dass die Volumenzunahme im Zylinderraum 6 und im linken Ringraum7a etwa gleich groß ist wie die Volumenverringerung im rechten Ringraum 8a. Dadurch kann mit einem absolut geschlossenen Druckmittel-Kreislauf ohne äußere Druckmittelanschlüsse, ohne offenen Tank, Ausgleichsbehälter etc. gearbeitet werden.

Schließlich zeigen die Figuren 1 und 2 noch, dass die Pumpe 9 mit ihrem Antrieb 10 direkt an die Klemmvorrichtung, nämlich am Gehäuse 1, angebaut ist. Es genügt also ein einfacher elektrischer Anschluss, um die hydraulische Klemmvorrichtung zu betreiben.

Im Ausführungsbeispiel erfolgt die Belastung der Klemmbuchse 3 in Klemmrichtung durch das Federpaket 4; stattdessen wäre natürlich auch eine hydraulische Belastung der Buchse im Klemmsinn möglich. Ebenso liegt es im Rahmen der Erfindung die Klemmbuchse axial ortsfest im Gehäuse anzuordnen und stattdessen mit einem axial verschiebbaren konischen Außenring zu arbeiten. Im letztgenannten Fall würde der Lösekolben nicht auf die Klemmbuchse, sondern auf den Außenring einwirken.

## Patentansprüche

1. Vorrichtung zum Verklemmen einer unter Last stehenden Stange (2), aufweisend zumindest ein im Gebrauch Stangen Umfang angreifendes, radial elastisches Klemmelement (3), das an seinem äußeren Umfang konisch geformt ist, und zumindest ein entsprechend konisch geformtes Außenteil (1a), in welchem das Klemmelement (3) angeordnet ist, derart, dass eine Relativbewegung zwischen Klemmelement (3) und Außenteil (1a) zur Verklemmung einer Stange (2), eine Gegenbewegung zur Freigabe der Stange führt, wobei die Vorrichtung weiterhin einen Lösekolben (5) aufweist, welcher die Gegenbewegung erzeugt, wobei der Lösekolben (5) durch ein Druckmedium, vorzugsweise Hydrauliköl, beaufschlagbar ist, das von einer zu der Vorrichtung gehörigen Pumpe (9) geliefert wird, **gekennzeichnet durch**
dichte, die Relativbewegung des Lösekolbens (5) elastisch aufnehmende Membranen (7, 8), **durch** welche die vom Druckmedium beaufschlagten Bereiche des Lösekolbens (5, 5a) und der ihn umgebenden Teile (1b) gegenüber der Umgebung abgedichtet sind.

2. Vorrichtung nach Anspruch 1, **gekennzeichnet durch** einen den Lösekolben (5) umgebenden Zylinder (1b), wobei die Membranen (7, 8) zwischen dem Lösekolben (5) und dem Zylinder (1b) angeordnet sind.

3. Vorrichtung nach Anspruch 1, **gekennzeichnet durch** einen den Lösekolben (5) umgebenden Zylinder (1b) mit Anschlussteilen (1a, 1c), wobei die Membranen (7, 8) zwischen Anschlussteilen (5a, 11) des Lösekolbens (5) einerseits und zwischen den Anschlussteilen (1a, 1c) des Zylinders (1b) andererseits angeordnet sind, derart, dass zumindest ein gegenüber der Umgebung abgedichteter Ringraum (7a, 8a) entsteht, der ebenfalls mit Druckmedium gefüllt ist.

4. Vorrichtung nach Anspruch 3, **dadurch gekennzeichnet,**
**dass** die radiale Querschnittsfläche des zumindest einen Ringraumes (7a, 8a) so bemessen ist, dass das Druckmediumvolumen der Klemmvorrichtung bei Relativbewegungen des Lösekolbens 5 zumindest annähernd konstant bleibt.

5. Vorrichtung nach Anspruch 3, **dadurch gekennzeichnet,**
**dass** zwei axial distanzierte Ringräume (7a, 8a) zur Aufnahme von Druckmedium vorrat und Leckage-Drukmedium vorgesehen sind.

6. Vorrichtung nach Anspruch 3, **dadurch gekennzeichnet,**
**dass** der zumindest eine Ringraum (7a, 8a) an die Saugseite der Pumpe (9) angeschlossen ist.

7. Vorrichtung nach Anspruch 1, **dadurch gekennzeichnet,**
**dass** die pumpe (9) mitsamt ihrem elektrischen Antrieb (10) integraler Bestandteil der Vorrichtung ist, insbesondere am Gehäuse (1) montiert ist.

8. Vorrichtung an Anspruch 1 oder 7, **dadurch gekennzeichnet, dass** die Vorrichtung ein Druckmediumreservoir (7a, 8a) aufweist, welches am oder im Gehäuse (1) angeordnet ist.

9. Vorrichtung nach Anspruch 1 oder 7, **dadurch gekennzeichnet,**
**dass** die Pumpe (9) mit ihrem Antrieb (10) als Schwingankerpumpe ausgebildet ist.

10. Vorrichtung nach Anspruch 1, **dadurch gekennzeichnet,**
**dass** ein Drucksensor in den Druckmediumkreislauf eingebaut ist, der bei Unterschreiten eines vorgegebenen Druckes in einer Druckleitung (16) der Pumpe die Pumpe (9) einschaltet, bis ein bestimmter Solldruck erreicht ist.

11. Vorrichtung nach Anspruch 1 oder 7, **dadurch gekennzeichnet,**
**dass** in einer Druckleitung (16) der Pumpe (9) eine Rückflusssperre eingebaut ist.

## Claims

1. A device for clamping a rod subjected to a load having at least one radially elastic clamping element (3), which engages, in use, the periphery of the rod and whose outer periphery is of conical shape, and at least one correspondingly conically shaped outer member (1a), in which the clamping element (3) is arranged such that a relative movement between the clamping element (3) and outer member (1a) results in the clamping of a rod (2) and a movement in the opposite direction results in release of a rod, whereby the device further includes a release piston (5), which produces the movement in the opposite direction, wherein the release piston (5) may be acted on by a pressure median, preferably hydraulic oil, which is supplied by a pump (9) associated with the device, **characterised by** sealed membranes (7, 8), which elastically absorb the relative movement of the release piston (5) and by which the regions of the release piston (5, 5a) acted on by the pressure median and the components (1b) surrounding it are sealed with respect the surroundings.

2. A device as claimed in claim 1, **characterised by** a cylinder (1b) surrounding the release piston (5), wherein the membranes (7, 8) are arranged between the release piston (5) and the cylinder (1b).

3. A device as claimed in claim 1, **characterised by** a cylinder (1b), which surrounds the release piston (5), with connecting members (1a, 1c), wherein the membranes (7, 8) are arranged between connecting members (5a, 11) of the release piston (5) on the one hand and between the connecting members, (1a, 1c) of the cylinder (1b) on the other hand such that at least one annular space (7a, 8a) is produced, which is sealed with respect to the surroundings and is also filled with pressure medium.

4. A device as claimed in claim 3, **characterised in that** the radial cross-sectional area of the at least one annular space (7a, 8a) is so dimensioned that the pressure medium volume of the clamping device remains at least approximately constant when relative movements of the release piston (5) occur.

5. A device as claimed in claim 3, **characterised in that** two axially spaced annular spaces (7a, 8a) are provided for accommodating a pressure medium supply and leakage pressure medium.

6. A device as claimed in claim 3, **characterised in that** the at least one annular space (7a, 8a) is connected to the suction side of the pump (9).

7. A device as claimed in claim 1, **characterised in that** the pump (9) together with its electric motor (10) is an integral component of the device and, in particular, is mounted on the housing (1).

8. A device as claimed in claim 1 or 7, **characterised in that** the device includes a pressure medium reservoir (7a, 8a) which is arranged on or in the housing (1).

9. A device as claimed in claim 1 or 7, **characterised in that** the pump (9) with its motor (10) is constructed in the form of an oscillating armature pump.

10. A device as claimed in claim 1, **characterised in that** a pressure sensor is incorporated into the pressure in a pressure line (16) of the pump falls below a predetermined pressure until a predetermined desired pressure is reached.

11. A device as claimed in claim 1 or 7, **characterised in that** a non-return valve is incorporated into a pressure line (16) of the pump (9).

## Revendications

1. Dispositif pour serrer une tige (2) soumise à une charge, présentant au moins un élément de serrage (3) radialement élastique, agissant en utilisation sur la circonférence de la tige, élément qui est réalisé de forme conique sur son pourtour extérieur, et au moins une partie extérieure (1a) réalisée de forme conique correspondante, dans laquelle est disposé l'élément de serrage (3), de telle sorte qu'un mouvement relatif entre l'élément de serrage (3) et la partie extérieure (1a) en vue du serrage d'une tige (2) engendre un mouvement contraire pour libérer la tige, sachant que le dispositif présente en outre un piston de desserrage (5) qui produit le mouvement contraire, sachant que le piston de desserrage (5) peut être sollicité par un fluide sous pression, huile hydraulique de préférence, qui est délivré par une pompe (9) faisant partie du dispositif,
**caractérisé par** des membranes étanches (7, 8), recevant élastiquement le mouvement relatif du piston de desserrage (5), par lesquelles les régions du piston de desserrage (5, 5a) et des pièces (1b) l'entourant qui sont sollicitées par le fluide sous pression sont étanchées vis-à-vis de l'environnement.

2. Dispositif selon la revendication 1, **caractérisé par** un cylindre (1b) entourant le piston de desserrage (5), sachant que les membranes (7, 8) sont disposées entre le piston de desserrage (5) et le cylindre (1b).

3. Dispositif selon la revendication 1, **caractérisé par** un cylindre (1b) entourant le piston de desserrage (5) qui est pourvu de parties de raccordement (1a, 1c), sachant que les membranes (7, 8) sont disposées entre des parties de raccordement (5a, 11) du piston de desserrage (5) d'une part et entre les parties de raccordement (1a, 1c) du cylindre (1b) d'autre part, de telle sorte qu'est créé au moins un espace annulaire (7a, 8a) étanché vis-à-vis de l'environnement, espace qui est lui aussi rempli de fluide sous pression.

4. Dispositif selon la revendication 3, **caractérisé en ce que** l'aire de section radiale de l'espace annulaire au moins unique (7a, 8a) est dimensionnée de telle sorte que le volume de fluide sous pression du dispositif de serrage demeure au moins approximativement constant lors des mouvements relatifs du piston de desserrage (5).

5. Dispositif selon la revendication 3, **caractérisé en ce qu'**il est prévu deux espaces annulaires (7a, 8a) axialement distants, pour recevoir une réserve de fluide sous pression et du fluide de fuite sous pression.

6. Dispositif selon la revendication 3, **caractérisé en ce que** l'espace annulaire au moins unique (7a, 8a) est raccordé au côté d'aspiration de la pompe (9).

7. Dispositif selon la revendication 1, **caractérisé en ce que** la pompe (9) fait intégralement partie du dispositif conjointement avec son entraînement électrique (10), notamment est montée sur le carter (1).

8. Dispositif selon la revendication 1 ou 7, **caractérisé en ce que** le dispositif présente un réservoir de fluide sous pression (7a, 8a), qui est disposé sur ou dans le carter (1).

9. Dispositif selon la revendication 1 ou 7, **caractérisé en ce que** la pompe (9) est réalisée avec son entraînement (10) sous forme de pompe à armature oscillante.

10. Dispositif selon la revendication 1, **caractérisé en ce qu'**un capteur de pression est monté dans le circuit de fluide sous pression, capteur qui, en cas de sous-dépassement d'une pression prescrite dans une conduite de refoulement (16) de la pompe, enclenche la pompe (9) jusqu'à ce qu'une pression de consigne donnée soit atteinte.

11. Dispositif selon la revendication 1 ou 7, **caractérisé en ce qu'**un clapet de non-retour est monté dans une conduite de refoulement (16) de la pompe (9).
